# EUROPÄISCHE PATENTSCHRIFT

(11) **EP 2 131 999 B1**
(45) Veröffentlichungstag und Bekanntmachung des Hinweises auf die Patenterteilung: **02.03.2011**
(21) Anmeldenummer: 08734846.2
(22) Anmeldetag: 28.03.2008
(51) Int. Cl.: B23Q 16/06

(54) **RUNDSCHALTEINHEIT MIT VERRIEGELUNG**
ROTARY INDEXING UNIT HAVING A LOCKING DEVICE
UNITÉ DE TRANSFERT CIRCULAIRE PRÉSENTANT UN DISPOSITIF DE VERROUILLAGE

(30) Priorität: 30.03.2007 DE 102007015807
(43) Veröffentlichungstag der Anmeldung: 16.12.2009
(73) Patentinhaber: Friedemann Wagner GmbH, 78559 Gosheim (DE)
(72) Erfinder: GOSE, Paul, 72336 Balingen (DE)
(74) Vertreter: Neunert, Peter Andreas
(86) Internationale Anmeldenummer: PCT/EP2008/002471
(87) Internationale Veröffentlichungsnummer: WO 2008/119509

(56) Entgegenhaltungen:
- DD-A1- 265 351
- JP-A- 8 294 846
- JP-A- 2004 216 462
- US-A- 3 824 877
- US-B1- 6 328 508

## Beschreibung

Die Erfindung betrifft eine Rundschalteinheit mit einem schwenkbar in einem Gehäuse gelagerten, mittels einer entsperrbaren Verriegelungsvorrichtung gegenüber dem Gehäuse verriegelten Schwenkteller.

Aus der DD 265 351 A1 ist eine Rundschalteinheit bekannt. Dort weist eine komplizierte hydraulische Positioniervorrichtung zwei Positionierbolzen auf. Beide Positionierbolzen werden wechselweise angetrieben. Weiterhin sind gattungsgemäße Rundschalteinheiten aus der JP 8-294846, der JP 2004-216462 sowie der US 3,824,887 bekannt.

Der vorliegenden Erfindung liegt die Aufgabe zugrunde, eine Rundschalteinheit zu entwickeln, die genau positioniert werden kann.

Diese Aufgabe wird mit den Merkmalen des Anspruchs 1 gelöst. Dazu umfasst die Verriegelungsvorrichtung eine entsperrbare Blockiervorrichtung und eine Arretiervorrichtung. Die Arretiervorrichtung verriegelt vorgespannt den Schwenkteller gegen die gesperrte Blockiervorrichtung. Das Entsperren der Blockiervorrichtung gibt die Arretiervorrichtung frei, die mittels eines Schubgetriebes unter Abbau der Vorspannung den Schwenkteller gegenüber dem Gehäuse schwenkt.

Weitere Einzelheiten der Erfindung ergeben sich aus den Unteransprüchen und der nachfolgenden Beschreibung einer schematisch dargestellten Ausführungsform.
- Figur 1:: Querschnitt einer Rundschalteinheit;
- Figur 2:: Draufsicht auf Figur 1 ;
- Figur 3:: Seitenansicht der Rundschalteinheit mit Blockiervorrichtung;
- Figur 4:: Seitenansicht der Rundschalteinheit mit Arretiervorrichtung;
- Figur 5:: Ansicht einer Rundschalteinheit von unten.

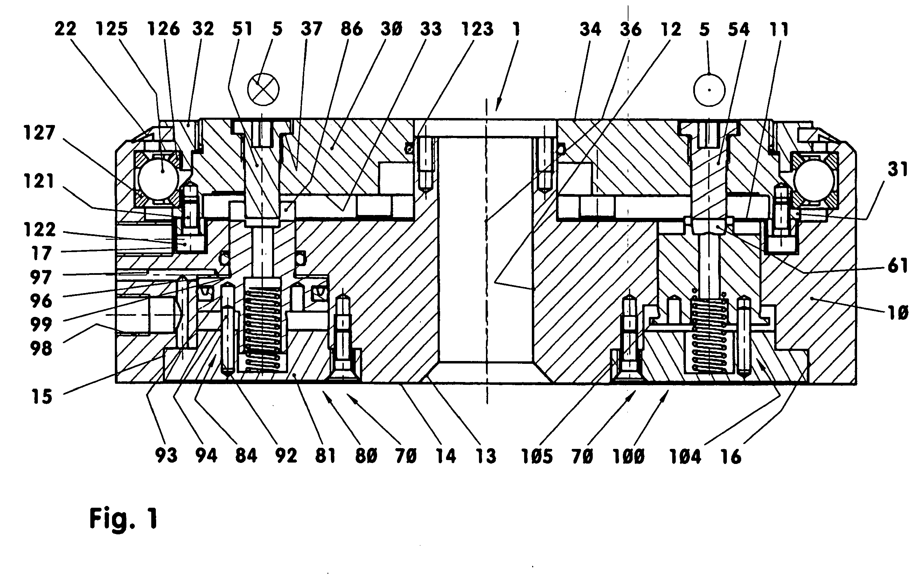

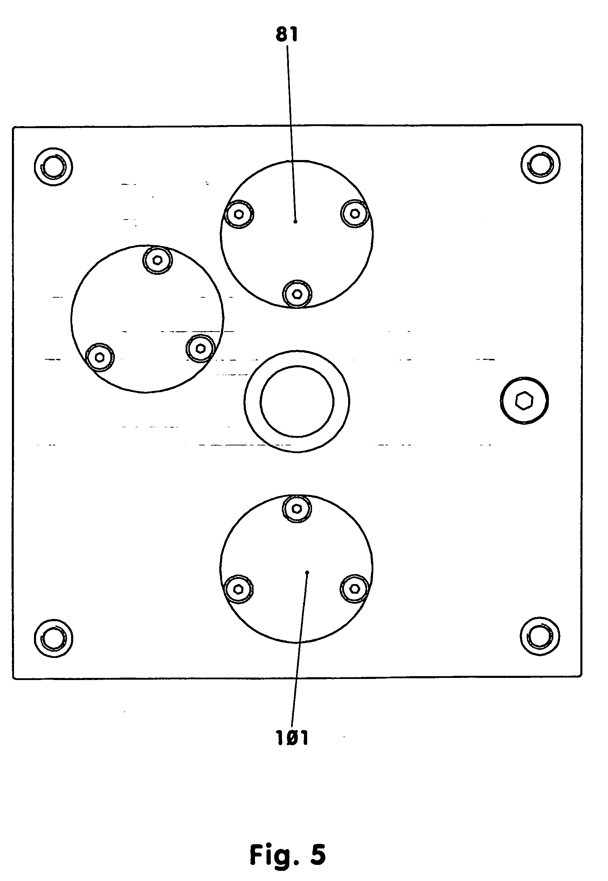

Die Figuren 1 bis 5 zeigen eine Rundschalteinheit 1, z.B. einen Rundschalttisch einer Werkstückzuführung. Die Rundschalteinheit 1 umfasst ein beispielsweise feststehendes, quaderförmiges Gehäuse 10 und einen im Gehäuse 10 gelagerten Schwenkteller 30. Zur Lagerung des Schwenktellers 30 hat das Gehäuse 10 eine ringnutförmige Ausnehmung 11, in der ein Drahtkugellager 125 oder ein vergleichbares Vierpunktlager sitzt. Die als Lageraußenring wirkenden Lagerdrähte sind dort gelagert. Der z.B. scheibenförmig gestaltete Schwenkteller 30 nimmt die Lagerdrähte 126, 127 auf, die die Funktion als Lagerinnenring übernehmen. Zur Aufnahme des unteren Lagerdrahtes 127 hat der Schwenkteller 30 einen Wellenbund 31. Der obere Lagerring 126 wird durch einen am Schwenkteller 30 angeordneten Einstellring 32 spieleinstellbar gehalten.

Das Gehäuse 10 hat u.a. eine zentrale Durchgangsbohrung 12 mit einem bodenseitigen Gehäusebund 13. Der Schwenkteller 30 ist gegenüber dem ortsfesten Gehäuse 10 mittels der von außen sichtbaren Lippendichtung 22 und einem O-Ring 123 abgedichtet.

An der Unterseite 33 des z.B. runden Schwenktellers 30 sind z.B. sechs Zylinderschrauben 121 eingeschraubt, deren Kopf 122 in einer Ringnut 17 des Gehäuses 10 liegt. Mittels dieser Zylinderschrauben 121 kann beispielsweise bei der Montage die Lage des Schwenktellers 30 zum Gehäuse 10 abgefragt werden.

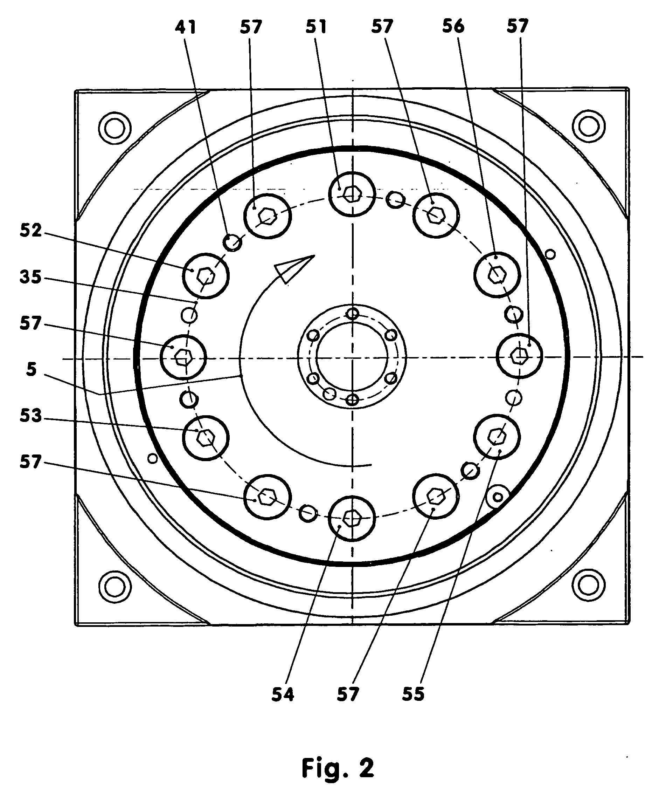

Der Schwenkteller 30 hat auf einem gemeinsamen, zur Schwenkachse 36 des Schwenktellers 30 konzentrischen Teilkreis 35 z.B. zwölf Schraubensenkungen 37, die zueinander jeweils um einen Winkel von 30 Grad versetzt sind. Die einzelnen Schraubensenkungen 37 sind hier identisch ausgebildet und weisen im Bereich der Durchgangsbohrungen 38 Gewinde 39 auf. Weiterhin sind im Schwenkteller 30 zwischen einigen dieser Schraubensenkungen 37 z.B. acht nicht angesenkte Gewindebohrungen 41 angeordnet, vgl. Figur 2. Letztere sitzen auf dem gleichen Teilkreis 35 wie die Schraubensenkungen 37 und sind z.B. jeweils um 15 Grad zu diesen versetzt. Mittels dieser Gewindebohrungen 41 kann beispielsweise ein kundenspezifischer Sonderteller auf dem Schwenkteller 30 befestigt werden.

In beispielsweise jeder zweiten Schraubensenkungen 37 sind Teilungsbolzen 51 - 56 eingeschraubt, die restlichen Schraubensenkungen 37 sind mit Verschlussschrauben 57 verschlossen. Die einzelnen Teilungsbolzen 51 - 56 sind z.B. gleichartig aufgebaut und haben einen längeren Schaft als die Verschlussschrauben 57. Somit sind in diesem Ausführungsbeispiel jeweils zwei Teilungsbolzen 51, 54; 52, 55; 53, 56 im Teilkreis 35 einander gegenüber angeordnet. Es ist aber auch denkbar, drei oder ein Vielfaches von drei Teilungsbolzen 51 - 56 so anzuordnen, dass diese um 120 Grad zueinander versetzt sind. Auch andere regelmäßige Teilungen, z.B. mit zwei, vier, fünf, etc. Teilungsbolzen 51 - 56 sind denkbar. Die Teilungsbolzen 51 - 56 und die Verschlussschrauben 57 haben einen Innensechskant 58, so dass die Schraubenköpfe 59 bündig mit der Tellerfläche 34 sind. Die Teilungsbolzen 51 - 56 ragen an der Unterseite 33 des Schwenktellers 30 aus diesem heraus. Zumindest in diesem überstehenden Abschnitt 61 sind die Teilungsbolzen 51 - 56 in diesem Ausführungsbeispiel zylindrisch und ohne Gewinde ausgebildet.

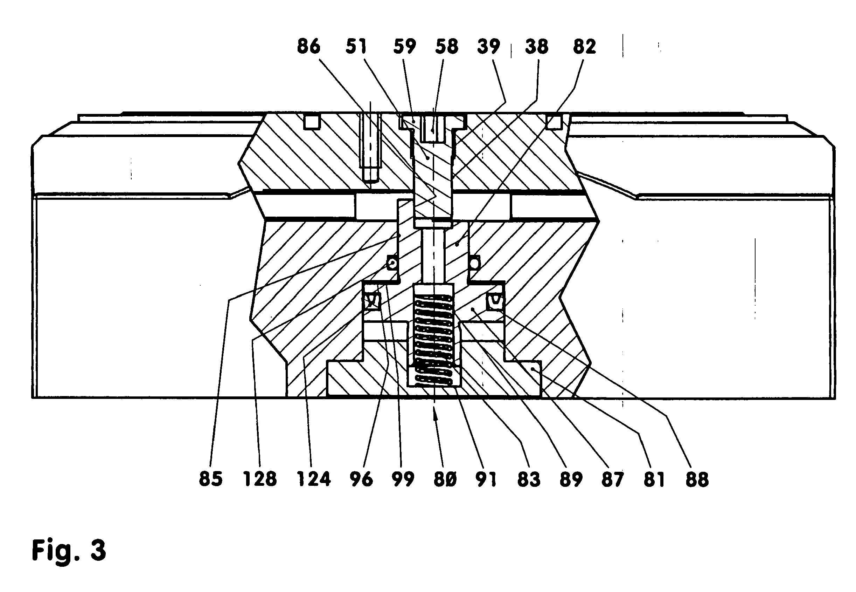

Im Gehäuse 10 sitzt eine Blockiervorrichtung 80 und eine Arretiervorrichtung 100. Die Blockiervorrichtung 80 umfasst einen mit dem Gehäuseboden 14 verschraubten Verschlussdeckel 81, einen Indexbolzen 82, einen Energiespeicher 83, und eine Bolzenführung 84. Der Indexbolzen 82 ist beispielsweise ein im Schnitt T-förmig ausgebildeter Hohlbolzen. Sein in den Darstellungen der Figuren 1 und 3 nach oben ragender Schaft 85 hat eine halbzylinderförmige Anschlagfläche 86, die den zylindrischen Abschnitt 61 eines ersten Teilungsbolzens 51 zumindest bereichsweise anliegend umgreift. Im Gehäuse 10 sitzt ein Dichtungselement 128, z.B. ein O-Ring, der den Schaft 85 des Indexbolzens 82 gegen das Gehäuse 10 abdichtet. In einer umlaufenden Nut 88 des Indexbolzenkopfes 87 liegt ein Wellendichtring 124, der den Indexbolzenkopf 87 gegen das Gehäuse 10 abdichtet.

In einer Einsenkung 89 des Indexbolzenkopfes 87 und an einer Stützfläche 91 des Verschlussdeckels 81 stützt sich der Energiespeicher 83, z.B. eine Druckfeder 83 ab. Diese Feder 83 drückt in den Darstellungen der Figuren 1 und 3 den Indexbolzen 82 nach oben.

Parallel zur Feder 83 ist z.B. in einer deckelseitigen 92 und in einer bolzenkopfseitigen Stiftaufnahme 93 ein Zylinderstift 94 geführt. Mit dieser Bolzenführung 84 wird der Indexbolzen 82 bei einer Hubbewegung geführt und sein Verdrehen verhindert.

Die hier obenliegende Kolbenfläche 99 des Indexbolzenkopfes 87 begrenzt mit dem Gehäuse 10 einen Druckraum 96, der über Kanäle 97 mit einem Pneumatikanschluss 98 verbunden ist.

Die Arretiervorrichtung 100 umfasst einen mit dem Gehäuseboden 14 verschraubten Verschlussdeckel 101, einen Arretierbolzen 102, einen Energiespeicher 103, und eine Bolzenführung 104. Der Verschlussdeckel 101, der Energiespeicher 103 und die Bolzenführung 104 sind ähnlich aufgebaut wie die entsprechenden Bauteile 81, 83, 84 der Blockiervorrichtung 80.

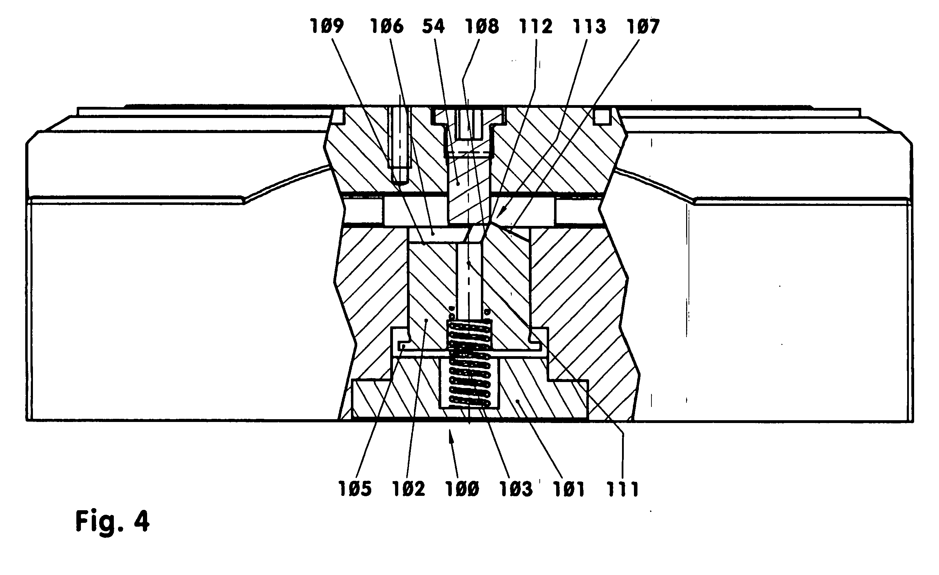

Der Arretierbolzen 102 ist ein weitgehend zylindrischer Bolzen mit einem in den Figuren 1 und 4 unten dargestellten Anschlagbund 105. Seine in diesen Figuren 1 und 4 obenliegende Stirnfläche 106 hat drei aneinander angrenzende Abschnitte 107 - 109. Ein erster, außenliegender Abschnitt 107 schließt mit einer Normalenebene zur Mittelachse beispielsweise einen Winkel von 24 Grad ein und steigt zum Zentrum des Arretierbolzens 102 hin an. Dieser Flächenabschnitt 107 wird im Folgenden als Einschubfläche 107 bezeichnet. Die Länge dieses Abschnitts 107, projiziert auf die Stirnfläche 106, beträgt beispielsweise ein Drittel des Durchmessers des zylindrischen Teils des Arretierbolzens 102.

Der zweite Abschnitt 108 ist eine Ausschubfläche 108. Diese Fläche schließt in der in der Figur 4 dargestellten Schnittdarstellung des Arretierbolzens 102 mit der Einschubfläche 107 beispielsweise einen rechten Winkel ein. Ihre auf die Stirnfläche 106 projizierte Länge, vgl. Figur 4, beträgt in diesem Ausführungsbeispiel ein Zehntel des Durchmessers des Arretierbolzens 102. Die Ausschubfläche 107 kann eine ebene Fläche oder z.B. eine quer zur Zeichnungsebene der Figur 4 gewölbte Fläche sein.

Die Einschub- 107 und die Ausschubfläche 108 können mittels einer z.B. normal zur Mittellinie des Arretierbolzens 102 orientierten Fläche verbunden sein.

Der dritte Abschnitt 109 liegt normal zur Mittellinie 111 des Arretierbolzens 102. Dieser Flächenabschnitt 109 umfasst den restlichen Bereich der Stirnfläche 106.

Zur Aufnahme der Blockiervorrichtung 80 und der Arretiervorrichtung 100 hat das Gehäuse 10 z.B. zwei vom Gehäuseboden 14 aus zugängliche, einander gegenüberliegende Ausnehmungen 15, 16.

In die erste Ausnehmung 15 wird bei der Montage beispielsweise die Blockiervorrichtung 80 so eingesetzt, dass die Anschlagfläche 86 des Indexbolzens 82 entgegen der Schwenkrichtung 5 zeigt. In der Figur 1 ist die Schwenkrichtung 5 im Bereich der Blockiervorrichtung 80 in die Zeichnungsebene gerichtet. Der Abstand der gedachten Mittelachse des Indexbolzens 82 zur Schwenkachse des Schwenktellers 30 entspricht dem Radius des Teilkreises 35, auf dem die Teilungsbolzen 51 - 56 sitzen.

In die zweite Ausnehmung 16 wird die Arretiervorrichtung 100 derart eingesetzt, dass die Ausschubfläche 108 in die Schwenkrichtung 5 zeigt. In der Figur 1 ist die Schwenkrichtung 5 im Bereich der Arretiervorrichtung 100 aus der Zeichnungsebene heraus gerichtet. Somit zeigt die Ausschubfläche 108 des Arretierbolzens 102 in Richtung der Anschlagfläche 86 des Indexbolzens 82. Die Mittellinie 111 des Arretierbolzens 102 schneidet den Teilkreis 35 in Normalenrichtung des Teilkreises 35.

Nach der Montage sind die Blockiervorrichtung 80 und die Arretiervorrichtung 100 derart angeordnet, dass z.B. die zwei Teilungsbolzen 51, 54 zwischen der Anschlagfläche 86 und der Ausschubfläche 108 eingeklemmt sind. Die Blockier- 80 und die Arretiervorrichtung 100 bilden somit eine Verriegelungsvorrichtung 70 der Rundschalteinheit 1.

In dem hier dargestellten Ausführungsbeispiel mit einander gegenüber angeordneten Vorrichtungen 80, 100 sind die jeweils anliegenden Teilungsbolzen 51, 54 auf dem Teilkreis 35 um 180 Grad zueinander versetzt angeordnet. Es ist aber auch denkbar, die beiden Vorrichtungen 80, 100 z.B. bei drei oder einem Vielfachen von drei Teilungsbolzen 51 - 56 um 120 Grad zueinander versetzt anzuordnen oder bei fünf oder einem Vielfachen von fünf Teilungsbolzen 51 - 56 die Vorrichtungen 80, 100 um 72 Grad oder 144 Grad, etc. zueinander versetzt anzuordnen, etc.

Beim Betrieb wird die Rundschalteinheit 1 beispielsweise manuell betätigt. Hierbei wird der Schwenkteller 30 oder ein auf diesen aufgesetzter Sonderteller z.B. mittels Handgriffen - die Anzahl der Handgriffe entspricht beispielsweise der Anzahl der Teilungsbolzen 51 - 56 im Uhrzeigersinn der in der Figur 2 dargestellten Draufsicht geschwenkt. Der pneumatische Anschluss 98 ist zunächst nicht druckbeaufschlagt, so dass die Feder 83 den Indexbolzen 82 in den Figuren 1 und 3 nach oben belastet. Der Arretierbolzen 102 wird mittels der Feder 103 nach oben gedrückt, vgl. die Figuren 1 und 4.

Beim Schwenken in der Schwenkrichtung 5 kommt der in der Schwenkrichtung 5 z.B. vorne liegende Teilungsbolzen 51 zur Anlage an die Anschlagfläche 86. Letztere verhindert ein weiteres Schwenken des Schwenktellers 30 in der genannten Schwenkrichtung 5. In dieser Position fluchtet in diesem Ausführungsbeispiel die Mittellinie des Teilungsbolzens 51 mit der Mittellinie des Indexbolzens 82.

Der in der Schwenkrichtung 5 hinten liegende Teilungsbolzen 54 kontaktiert beim Schwenken des Schwenktellers 30 die Einschubfläche 107 des Arretierbolzens 102. Der Arretierbolzen 102 wird in der Darstellung der Figuren 1 und 4 nach unten eingeschoben, wobei die Druckfeder 103 komprimiert und dabei vorgespannt wird. Der Energiespeicher 103 wird geladen. Beim weiteren Schwenken des Tellers 30 überfährt der Teilungsbolzen 54 die Kuppe 112 zwischen der Einschub- 107 und der Ausschubfläche 108.

Sobald der Teilungsbolzen 54 die Kuppe 112 überschritten hat, schiebt die Druckfeder 103 unter geringfügigem Abbau der Vorspannung den Arretierbolzen 102 nach oben. Hierbei wird mittels der schrägen Ausschubfläche 108, die Teil einer Schubvorrichtung 113 ist, der Teilungsbolzen 54 - und damit der Schwenkteller 30 - weiter in der Schwenkrichtung 5 gedrückt. Hierbei wird der erste Teilungsbolzen 51 gegen die Anschlagfläche 86 gepresst und der Schwenkteller somit verriegelt. Die Mittellinie des hinten liegenden Teilungsbolzens 54 fluchtet nun beispielsweise mit der Mittellinie 111 des Arretierbolzens 102. Der Schwenkteller 30 ist jetzt genau positioniert.

Soll der Schwenkteller 30 weitergeschwenkt werden, wird der pneumatische Anschluss 98 druckbeaufschlagt. Das pneumatische Medium, z.B. Luft, Stickstoff, etc. strömt durch die Kanäle 97 in den Druckraum 96 und schiebt die Kolbenfläche 99 nach unten. Der Indexbolzen 82 wird in den Darstellungen der Figuren 1 und 3 nach unten geschoben, wobei die Anschlagfläche 86 den Teilungsbolzen 51 verlässt. Der Teilungsbolzen 51 wird freigegeben.

Die immer noch vorgespannte Druckfeder 103 der Arretiervorrichtung 100 belastet den Arretierbolzen 102, der nun mittels der Schubvorrichtung 113 den Teilungsbolzen 54 - und damit den Schwenkteller 30 - in die Schwenkrichtung 5 schwenkt. Der Arretierbolzen 102 wird beispielsweise maximal ausgefahren, wobei Vorspannung der Druckfeder 103 abgebaut wird. Beim Ausfahren des Arretierbolzens 102 gleitet der Teilungsbolzen 54 in Richtung des dritten Flächenabschnitts 109 von der Ausschubfläche 108 ab. Der Schwenkteller 30 wird um einen kleinen Schwenkwinkel in der Schwenkrichtung 5 geschwenkt. Dieser Schwenkwinkel, um den der Schwenkteller 30 mittels des Arretierbolzens 102 geschwenkt wird, ist beispielsweise so groß, dass der erste Teilungsbolzen 51 die Anlagefläche 86 überfahren hat.

Die pneumatische Ansteuerung wird z.B. unmittelbar hiernach unterbrochen. Beispielsweise wird ein Entlüftungsventil geöffnet oder das pneumatische Medium in einen Tank geleitet. Der Druck im Druckraum 96 wird reduziert und die Feder 83 drückt den Indexbolzen 82 nach oben. Beim weiteren Schwenken des Schwenktellers 30 in der Schwenkrichtung 5 schlägt der nächste Teilungsbolzen 52 an die Anschlagfläche 86 an. Gleichzeitig verrastet ein weiterer Teilungsbolzen 55 mit der Ausschubfläche 108.

### Bezugszeichenliste

- 1: Rundschalteinheit

- 5: Schwenkrichtung

- 10: Gehäuse
- 11: ringnutförmige Ausnehmung
- 12: Durchgangsbohrung
- 13: Gehäusebund
- 14: Gehäuseboden
- 15, 16: Ausnehmungen
- 17: Ringnut

- 22: Lippendichtung

- 30: Schwenkteller
- 31: Wellenbund
- 32: Einstellring
- 33: Unterseite
- 34: Tellerfläche
- 35: Teilkreis
- 36: Schwenkachse
- 37: Schraubensenkungen
- 38: Durchgangsbohrungen
- 39: Gewinde

- 41: Gewindebohrungen

- 51 - 56: Teilungsbolzen
- 57: Verschlussschrauben
- 58: Innensechskant
- 59: Schraubenköpfe
- 61: Abschnitt von (51 - 56)

- 70: Verriegelungsvorrichtung

- 80: Blockiervorrichtung
- 81: Verschlussdeckel
- 82: Indexbolzen
- 83: Energiespeicher, Druckfeder
- 84: Bolzenführung
- 85: Schaft von (82)
- 86: Anschlagfläche
- 87: Indexbolzenkopf
- 88: umlaufende Nut
- 89: Einsenkung von (87)

- 91: Stützfläche
- 92: deckelseitige Stiftaufnahme
- 93: bolzenkopfseitige Stiftaufnahme
- 94: Zylinderstift

- 96: Druckraum
- 97: Kanäle
- 98: Pneumatikanschluss
- 99: Kolbenfläche

- 100: Arretiervorrichtung
- 101: Verschlussdeckel
- 102: Arretierbolzen
- 103: Energiespeicher, Druckfeder
- 104: Bolzenführung
- 105: Anschlagbund
- 106: Stirnfläche
- 107: erster Flächenabschnitt, Einschubfläche
- 108: zweiter Flächenabschnitt, Ausschubfläche
- 109: dritter Flächenabschnitt

- 111: Mittellinie von (102)
- 112: Kuppe
- 113: Schubvorrichtung

- 121: Zylinderschrauben
- 122: Kopf von (121)
- 123: O-Ring
- 124: Wellendichtring
- 125: Drahtkugellager, Wälzlager, Vierpunkt-Kugellager
- 126, 127: Lagerdrähte
- 128: Dichtungselement

## Patentansprüche

1. Rundschalteinheit (1) mit einem schwenkbar in einem Gehäuse (10) gelagerten, mittels einer entsperrbaren Verriegelungsvorrichtung (70) gegenüber dem Gehäuse (10) verriegelten Schwenkteller (30),
wobei die Verriegelungsvorrichtung (70) eine entsperrbare Blockiervorrichtung (80) und eine Arretiervorrichtung (100) umfasst,
wobei die Arretiervorrichtung (100) dazu ausgebildet ist, den Schwenkteller (30) gegen die gesperrte Blockiervorrichtung (80) vorgespannt zu verriegeln,
**dadurch gekennzeichnet,**
**dass** das Entsperren der Blockiervorrichtung (80) die Arretiervorrichtung (100) freigibt, die mittels einer Schubvorrichtung (113) unter Abbau der Vorspannung den Schwenkteller (30) gegenüber dem Gehäuse (10) schwenkt,
**dass** die Blockiervorrichtung (80) einen Indexbolzen (82) umfasst, wobei der Indexbolzen (82) eine Anschlagfläche (86) aufweist,
**dass** die Arretiervorrichtung (100) einen Arretierbolzen (102) umfasst, wobei der Arretierbolzen (102) eine Ein- (07) Ausschubfläche (108) aufweist und wobei die Ausschubfläche (108) in Richtung der Anschlagfläche (86) des Indexbolzens (82) zeigt,
**dass** im Schwenkteller (30) mindestens zwei Teilungsbolzen (51-56) angeordnet sind, und
**dass** bei verriegeltem Schwenkteller (30) die Ausschubfläche (108) und die Anschlagfläche (86) jeweils einen Teilungsbolzen (51-56) kontaktieren.

2. Rundschalteinheit (1) nach Anspruch 1, **dadurch gekennzeichnet, dass** sie manuell betätigt ist.

3. Rundschalteinheit (1) nach Anspruch 1, **dadurch gekennzeichnet, dass** die Blockiervorrichtung (80) federbelastet gesperrt ist.

4. Rundschalteinheit (1) nach den Ansprüchen 3 und 4, **dadurch gekennzeichnet, dass** der Indexbolzen (82) pneumatisch entsperrbar ist.

5. Rundschalteinheit (1) nach Anspruch 1, **dadurch gekennzeichnet, dass** die Arretiervorrichtung (100) federbelastet vorgespannt ist.

6. Rundschalteinheit (1) nach Anspruch 1, **dadurch gekennzeichnet, dass** der Schwenkteller (30) mittels Wälzlagern (125) im Gehäuse (10) gelagert ist.

7. Rundschalteinheit (1) nach Anspruch 10, **dadurch gekennzeichnet, dass** die Wälzlager (125) Vierpunkt-Kugellager (125) sind.

8. Rundschalteinheit (1) nach Anspruch 12, **dadurch gekennzeichnet, dass** die Teilungsbolzen (51 - 56) auf einem gemeinsamen Teilkreis (35) angeordnet sind, der konzentrisch zur Schwenkachse (36) des Schwenktellers (30) liegt.

9. Rundschalteinheit (1) nach den Ansprüchen 4, 8 und 12, **dadurch gekennzeichnet, dass** der Abstand des Indexbolzens (86) und der Abstand des Arretierbolzens (102) zur Schwenkachse (36) des Schwenktellers (30) dem Radius des Teilkreises (35) der Teilungsbolzen (51 - 56) entspricht.

10. Rundschalteinheit (1) nach Anspruch 1, **dadurch gekennzeichnet, dass** der Schwenkteller (30) Befestigungsmöglichkeiten für Anbauteile aufweist.

## Claims

1. A rotary indexing unit (1) with a pivoting disc (30) which is mounted in a pivotable manner in a housing (10) and which is locked with respect to the housing (10) by means of an unlockable locking apparatus (70),
wherein the locking apparatus (70) comprises an unlockable blocking apparatus (80) and an arresting apparatus (100),
wherein the arresting apparatus (100) is designed in order to lock the pivoting disc (30) against the locked blocking apparatus (80) in a pre-stressed manner,
**characterized in that**
the unlocking of the blocking apparatus (80) releases the arresting apparatus (100) which pivots the pivoting disc (30) with respect to the housing (10) by means of a thrust apparatus (113) whilst reducing the pre-stressing,
the blocking apparatus (80) comprises an index pin (82), wherein the index pin (82) has a stop face (86), the arresting apparatus (100) comprises an arresting pin (102), wherein the arresting pin (102) has a push-in face (07) and a push-out face (108) and wherein the push-out face (108) faces in the direction of the stop face (86) of the index pin (82),
at least two division pins (51 to 56) are arranged in the pivoting disc (30), and
when the pivoting disc (30) is locked the push-out face (108) and the stop face (86) contact one division pin (51 to 56) in each case.

2. A rotary indexing unit (1) according to claim 1, **characterized in that** it is actuated manually.

3. A rotary indexing unit (1) according to claim 1, **characterized in that** the blocking apparatus (80) is locked in a spring-loaded manner.

4. A rotary indexing unit (1) according to claims 3 and 4 [*sic*], **characterized in that** the index pin (82) is unlockable pneumatically.

5. A rotary indexing unit (1) according to claim 1, **characterized in that** the arresting apparatus (100) is pre-stressed in a spring-loaded manner.

6. A rotary indexing unit (1) according to claim 1, **characterized in that** the pivoting disc (30) is mounted in the housing (10) by means of roller bearings (125).

7. A rotary indexing unit (1) according to claim 10 [*sic*], **characterized in that** the roller bearings (125) are four-point ball bearings (125).

8. A rotary indexing unit (1) according to claim 12 [*sic*], **characterized in that** the division pins (51 to 56) are arranged on a common reference circle (35) which is situated concentrically to the pivot axis (36) of the pivoting disc (30).

9. A rotary indexing unit (1) according to claim 4, 8 and 12 [*sic*], **characterized in that** the distance of the index pin (86) and the distance of the arresting pin (102) from the pivot axis (36) of the pivoting disc (30) corresponds to the radius of the reference circle (35) of the division pins (51 to 56).

10. A rotary indexing unit (1) according to claim 1, **characterized in that** the pivoting disc (30) has possibilities of fastening for attachment parts.

## Revendications

1. Unité de transfert circulaire (1) comportant un plateau basculant (30) monté de manière basculante dans un boîtier (10) et verrouillable par rapport au boîtier (10) par un dispositif de verrouillage (70) qui peut être neutralisé,
- le dispositif de verrouillage (70) comporte un dispositif de blocage (80) déblocable et un dispositif de retenue (100), qui verrouille avec précontrainte le plateau basculant (30) par rapport au dispositif de blocage (80), bloqué,
unité **caractérisé en ce que**
- le déverrouillage du dispositif de blocage (80) libère le dispositif de retenue (100) qui bascule sous l'effet d'un dispositif de poussée (113) en réduisant la précontrainte du plateau basculant (30) par rapport au boîtier (10),
- le dispositif de blocage (80) comporte un goujon d'indexage (82) muni d'une surface de butée (86),
- le dispositif de retenue (100) comporte un goujon de retenue (102) ayant une surface de pénétration (107) et une surface d'éjection (108) dirigée vers la surface de butée (86) du goujon d'indexage (82),
- le plateau basculant (30) comportant au moins deux goujons d'indexage (51-56), et
- lorsque le plateau basculant (30) est verrouillé, la surface d'éjection (108) et la surface de butée (86) sont en contact chacune respectivement avec un goujon d'indexage (51-56).

2. Unité de transfert circulaire (1) selon la revendication 1,
**caractérisée par**
une commande manuelle.

3. Unité de transfert circulaire (1) selon la revendication 1,
**caractérisée en ce que**
le dispositif de blocage (80) est verrouillé sous l'effet d'un ressort.

4. Unité de transfert circulaire (1) selon les revendications 3 et 4,
**caractérisée en ce que**
le goujon d'indexage (82) est à déblocage pneumatique.

5. Unité de transfert circulaire (1) selon la revendication 1,
**caractérisée en ce que**
le dispositif de retenue (100) est précontraint par un ressort.

6. Unité de transfert circulaire (1) selon la revendication 1,
**caractérisée en ce que**
le plateau basculant (30) est monté dans le boîtier (10) par l'intermédiaire de paliers à roulements² (125).

7. Unité de transfert circulaire (1) selon la revendication 10,
**caractérisée en ce que**
les paliers à roulements (125) sont des paliers à billes à quatre points de contact (125).

8. Unité de transfert circulaire (1) selon la revendication 12,
**caractérisée en ce que**
les goujons d'indexage (51-56) sont installés sur un cercle primitif (35) commun concentrique à l'axe de basculement (36) du plateau basculant (30).

9. Unité de transfert circulaire (1) selon les revendications 4, 8 et 12,
**caractérisée en ce que**
la distance entre le goujon d'indexage (86) et la distance du goujon de retenue (102) par rapport à l'axe de basculement (36) du plateau basculant (30), correspondent au rayon du cercle primitif (35) des goujons d'indexage (51-56).

10. Unité de transfert circulaire (1) selon la revendication 1,
**caractérisée en ce que**
le plateau basculant (30) comporte des moyens de fixation pour recevoir des accessoires.
